Europäisches Patentamt

(19) European Patent Office

Office européen des brevets

(11) Publication number: **0 329 404**
A1

## (12) EUROPEAN PATENT APPLICATION

(21) Application number: 89301427.4

(22) Date of filing: 15.02.89

(51) Int. Cl.⁴: **C 02 F 3/20**
B 63 B 43/06

(30) Priority: 18.02.88 GB 8803843

(43) Date of publication of application:
23.08.89 Bulletin 89/34

(84) Designated Contracting States:
AT BE CH DE ES FR GB GR IT LI LU NL SE

(71) Applicant: TOM MAGUIRE & COMPANY LIMITED
Honeyborough Neyland
Milford Haven Dyfed SA73 1SE (GB)

(72) Inventor: Maguire, Thomas Henry
6 Cleggar Park Lamphey
Pembroke Dyfed (GB)

Robinson, Alec Martyn
East Farm Cosheston
Pembroke Dyfed (GB)

Brown, Ceri Charles
Long Island Lady Park
Tenby Dyfed (GB)

(74) Representative: Jones, Michael Raymond et al
HASELTINE LAKE & CO. Hazlitt House 28 Southampton
Buildings Chancery Lane
London WC2A 1AT (GB)

(54) Aeration equipment.

(57) There is disclosed aeration equipment comprising: a submersible and refloatable raft (1) provided with a floodable buoyancy means (9); and
at least one venturi aerator (20) carried by the raft (1), the aerator (20) including a nozzle through which a liquid is pumped in use, an outlet barrel, and an inlet port (22) through which air can be blown into the barrel or drawn into the barrel (21) by the action of the liquid passing through the nozzle. The equipment can be moved relatively easily from one location to another in a body of water.

Fig.1.

EP 0 329 404 A1

**Description**

## AERATION EQUIPMENT

This invention relates to aeration equipment.

In recent years venturi aerators have been developed for the purpose of introducing oxygen into a liquid, for example into an effluent slurry. Typically, with the use of venturi aerators as originally developed by the Electricity Council Research Centre and as manufactured and improved by Tom Maguire & Company Limited, the energy required to introduce each kilogram of oxygen from the atmosphere into solution can currently (1988) be in the range from 0.5 to 1 kilowatt hour, and can even be reduced to less than 0.5 kilowatt hour, whereas plants requiring the use of liquid oxygen as the source of oxygen which is to be injected into the slurry can involve operating costs of 1 kilowatt hour of energy per kilogram of oxygen introduced into solution, to which must be added the cost of purchasing liquid oxygen (currently at £50 sterling per ton).

The venturi aerators as manufactured by Tom Maguire & Company Limited and sold under their trade mark VO2 offer excellent oxygen transfer performance and good mixing of liquors, which are characteristics required by many industries for a range of diverse application such as the aeration of municipal sewage, industrial effluents and water supplies; as well as for the aerobic digestion of sewage sludges and food industry sludges and the dewatering of anaerobically digested sludges. The VO2 aeration system comprises one or more VO2 venturi aerator devices coupled to a liquor pump and an air supply. The liquor is pumped through the venturi nozzle, mixes with air in the throat, and is ejected as an intimate mixture of air and liquor into the bulk of the liquor where much of the oxygen transfer actually occurs. At liquor depths of up to 2.5 metres the venturi is usually allowed to self-entrain the required air but, at greater depths, high efficiencies may be obtained by blowing air into the venturi.

Depending on the particular installation, VO2 aerators can be supplied self-contained complete with a submersible pump as a free standing unit, or for mounting on a guide rail at a tank wall, or for through-the-wall mounting with external pumps. The latter can be totally accessible from outside the tank.

The oxygen transfer rate for a typical unit increases with the depth of immersion of the venturi in the liquor, but optimum absorption efficiency occurs at a depth of 6.5 metres when a transfer efficiency up to 3 kilograms of oxygen per kilowatt hour can reasonably be expected.

Much is known about the characteristics of venturis and, therefore, it is felt unnecessary to expand herein on the operation of venturi aerators.

The term "VO2" is a trade mark of Tom Maguire & Company Limited and an application for the registration of that trade mark in the United Kingdom has been filed.

Recently, considerable concern has been caused by sudden events which cause pollution in a river, for example the escape of chemicals into a river or a spillage of silage effluent into a river. The effects of such pollution can be reduced by introducing adequate oxygen into the river or other large mass of water (such as a lake), but the real problem is to get sufficient oxygen into the river at the desired location. One existing remedy is to provide aeration plant which relies on the use of liquid oxygen, the plant being rather cumbersome and being conveyed to the river bank or lake side on lorries; a large crane is then required to lift the submersible plant from the river bank to the desired location in the river but, it will be appreciated that with a river of considerable width, the distance that the heavy aeration plant can be moved from the bank will depend on the safe operating characteristics of the crane required to lift the plant out. For stability reasons cranes normally put down stabilising pads before commencing their lifting operations, and such pads can cause considerable damage to the river bank, particularly when the weight of plant to be lifted out into the river is borne in mind.

Additionally, if it is desired to move such aeration plant from one region of a river to another, so as to move the supply of oxygen to a region further downstream to which the polluted water has travelled, it will be necessary for the plant to be lifted out of the river by the crane, loaded aboard a lorry, moved downstream, together with the crane, and then for the crane (or another crane) to lift the plant out into the river again but at the downstream location.

According to the present invention, there is provided aeration equipment comprising:
a submersible and refloatable raft provided with a floodable buoyancy means; and
at least one venturi aerator carried by the raft, the aerator including a nozzle through which a liquid is pumped in use, an outlet barrel, and an inlet port through which air can be blown into the barrel or drawn into the barrel by the action of the liquid passing through the nozzle.

The raft may carry any number of venturi aerators, for example one or two venturi aerators.

The floodable buoyancy means could be like the buoyancy tanks on a submarine, in the sense of being separate tanks disposed, for example, around the periphery of the raft, with each tank being open at its lower region and having a valve in its upper region, and with provision for air to be introduced under pressure into the tanks. Instead of all the tanks being floodable, one or more tank may be of fixed buoyancy with the remainder being floodable. Where there is a plurality of floodable tanks, the controlled flooding of such tanks could be problematical because it will be appreciated that the raft, when being submerged, needs to settle evenly in the water. Accordingly, a convenient arrangement is for the buoyancy means to be a coil of hose, for instance a spiral coil of hose, lying in one or more generally horizontal plane, the hose preferably being open at one end. The spiral coil of hose can be arranged in a single layer which is generally horizontal; alternatively, the spiral coil of hose can be arranged as a plurality of layers with part of the hose being formed as a first spiral in a lower or lowermost layer and then rising to another part of the hose formed as a further spiral coil in an upper or uppermost layer, the hose also preferably being open at an end in the lower or lowermost layer of spiral coil. There can be any number of layers of spiral coil, depending on the degree of buoyancy required.

The aeration equipment of the present invention can be unloaded from the back of a lorry or trailer by a small crane or by hand (if the raft is small enough and light enough), and slid into the river. With air in the buoyancy means, and with mooring lines secured to the raft, the raft can be moved to the desired location in the river and, for example, two lines can secure the raft in position, with one line going to each bank. Clearly, additional lines could be employed if required.

Once the raft is at the desired location, the buoyancy means is flooded in a controlled manner so as to allow the raft to settle in the water and come to rest in the correct position and in the correct orientation on the bed of the river. When the buoyancy means is of the type constituted by a layer of a spiral coil of hose, or a plurality of layers of a spiral coil of hose, a reversible pumping means capable of withdrawing air from, or introducing air into, the hose via its other end is actuated. This pumping means can be remote and can be positioned on the bank of the lake or river, there being a flexible duct from the pumping means to the floodable buoyancy means. In order to cause the raft to settle in the water, air is withdrawn from the other end of the hose by means of the pumping means, which causes water to enter the hose by its one end and to move relatively uniformly along the spiral route of the hose so as to cause reasonably even flooding of the hose as a whole, thereby allowing the raft to settle without any undue tilting.

After use and after aeration has occurred, and when it is wished to recover the raft, air is pumped by the pumping means along the flexible duct to the floodable buoyancy means so as to expel water progressively from the buoyancy means, thereby providing a controlled and increasing degree of lift so as to allow the raft to rise to the surface of the body of water. Sufficient provision for buoyancy can be made, so as to permit the raft to "break free" from any mud in which it has settled at the bed of the river.

Associated with the nozzle of the or each venturi aerator is a motor-driven pump for introducing liquid under pressure into the venturi nozzle. The motor-driven pump can be carried by the raft, which obviously considerably increases the overall weight of the raft; in such an embodiment it may be necessary for the raft to be moved by a small lorry-mounted crane from the back of the lorry into the body of water. The axis of the motor of the motor-driven pump can be horizontal, vertical or inclined. The pump can, where there are two or more venturi aerators, provide water under pressure to each aerator. When the motor-driven pump is carried by the raft, the motor can be an electric or hydraulic motor powered by an umbilical electrical or hydraulic connection extending from the raft to the bank.

Where, in contrast, it is desired to avoid too heavy a raft, the motor-driven pump can remain on shore, and a first conduit can extend from the pump into the body of water to allow water to be taken from that body and into the pump, with a second conduit extending from the motor-driven pump to the liquid inlet of the or each venturi aerator, whereby the driving force for the venturi is, in effect, the motor (which can be a diesel engine) which drives the pump on shore, the pump providing water under pressure which then enters the nozzle of the or each venturi.

When the pump and its motor are retained on shore, possibly on its own wheels, the raft can be designed and constructed sufficiently lightly that it can be handled by two men and can be slid by those two men from the rear of a lorry or trailer down a ramp over the edge of the bank and into the water. When it is wished to recover the raft, the raft is brought to the foot of the ramp and can be drawn up the ramp and onto the back of the lorry or trailer by means of a winch, such as that used to haul vehicles onto vehicle recovery lorries or to haul small boats onto boat trailers.

The submersible raft forming part of the aeration equipment of the present invention can include suitable handles (where the raft is man handled by two or more men) or suitable lifting points (where the raft is to be swung up on the back of a lorry by a small crane). Additionally, the raft can include attachment points, to which the mooring lines can be secured. If, however, the raft is being towed from one location on the surface of a lake or river to another location, those same attachment points can be used to secure the towing lines.

As with conventional venturi aerators which are submerged in the body of liquid to be aerated, the aerators can be provided with air supply pipes which extend from the air inlet ports of the venturi aerators to a position above the level of the surface of the body of water.

For a better understanding of the present invention, and to illustrate how the same may be carried into effect, reference will now be made, by way of example, to the accompanying drawings in which:

Figure 1 is a side elevation (but with the hose shown as a vertical section) of one embodiment of aeration equipment in accordance with the present invention;

Figure 2 is a plan view (but with the hose only partially shown) of the embodiment illustrated in Figure 1;

Figure 3 is a side elevation (but with the hose shown as a vertical section) of a second embodiment of aeration equipment in accordance with the present invention; .

Figure 4 is a plan view (but showing only part of the hose) of the embodiment illustrated in Figure 3; and

Figure 5 is partly a side elevation and partly a vertical section of a third embodiment of aeration equipment in accordance with the present invention.

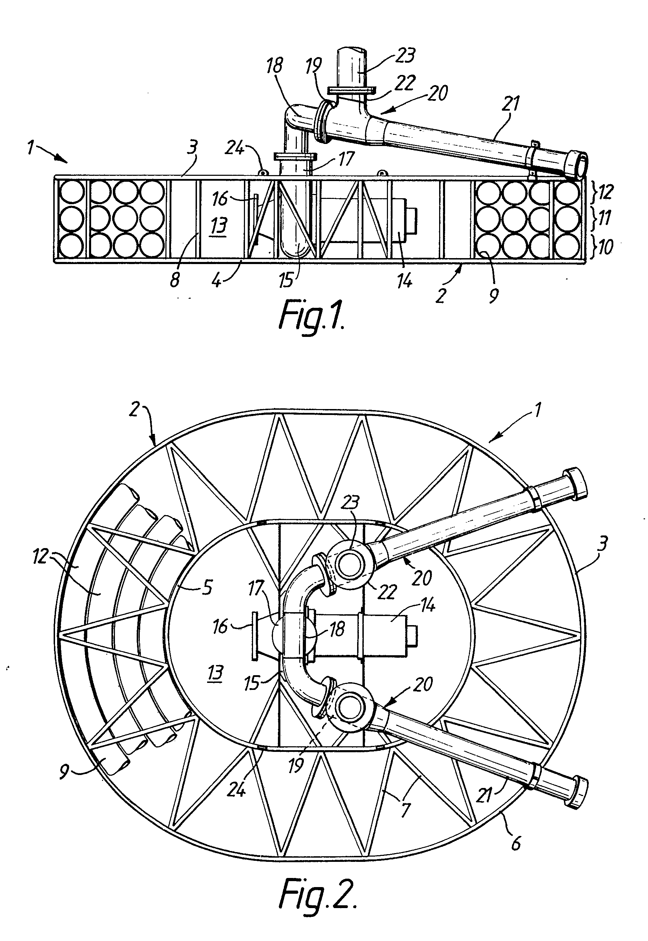

Referring to Figures 1 and 2 of the accompanying drawings, there is shown a raft generally indicated by the reference numeral 1, which includes a framework 2 formed from upper members 3 and lower members 4. The upper members 3 and lower members 4 include inner peripheral elements 5, outer peripheral elements 6 and horizontal spacers 7 which serve to space the inner and outer peripheral elements 5 and 6 from each other. The upper members 3 are held in spaced relationship from the lower members 4 by vertical spacers 8.

Located within the framework 1 between the upper and lower members 3 and 4, and between the inner and outer peripheral elements 5 and 6, is a floodable buoyancy means in the form of a single hose 9. The hose 9 is arranged in three layers, namely a lower layer 10, an intermediate layer 11 and an upper layer 12. One end of the hose 9 is open and is located in the lower layer 10. About one third of the hose 9 is coiled, like a spiral, in the lower layer 10 and this first third of the hose 9 then leads into the second third of the hose 9 which is similarly coiled in the second layer 11; this second third of the hose 9 leads, in turn, into the final third of the hose 9 which is similarly wound in the upper layer 12.

The other end (not shown) of the hose 9, i.e. the end disposed in the upper layer 12, is attached to a flexible duct (not shown) which can lead from the raft 1 to a remote location (for example a river bank) where it is attached to a pump which can be operated so as to withdraw air via the duct from the hose 9 or to propel air from the pump via the duct to the hose 9 (so as to expel any water therefrom). The operation of this remote pump will be described more fully herein below.

There is a considerable space 13 in the central region of the framework and it is in this space 13 that there is centrally located an electric motor 14 with its axis horizontally disposed (although the axis could be vertical or inclined), the motor being capable of driving a pump 15 also located within the space 13.

The pump 15 has an inlet 16 for liquid (for example river water) and an outlet 17 which is in communication with a manifold 18 by is bifurcated and leads to the respective liquid inlets 19 of two venturi aerators generally indicated by the reference numerals 20. The inlets 19 for liquid lead to the nozzle (not shown) within the aerators 20 and the nozzles communicate with the discharge barrels 21. Above the nozzles are inlets 22 for air to be entrained in the liquid, the inlets 22 communicating with upstanding pipes 23 which are of a sufficient height so as to project above the surface of a body of water even when the raft 1 is fully submerged in that body of water.

Shown at intervals around the inner peripheral element 5 of the upper members 3 are attachment points 24 to which cables can be secured, the cables being used to tow the raft (when the hose is full of air) to the desired location and to secure the raft at the desired location where aeration is to take place.

In practice, the raft can be carried on the back of a small lorry and, when it is needed, a crane, on the same lorry or on a different vehicle, can be used to lift the raft from the back of the lorry and into the water. The raft has attached to it a cable (not shown in the drawings) through which electricity can be supplied to the electric motor 14 and also the duct (also not shown) through which air can be withdrawn from, or returned to, the hose 9 by the action of a small pump on the bank, or on a vehicle.

With suitable lines attached to the attachment points 24 and with air in the hose 9, the raft 1 is pulled into position in the river and then the pump on the bank is operated to withdraw air from the hose 9 so as to effect a controlled flooding of a hose 9 and the settling of the raft 1 within the body of the water at the desired location. The flooding of the hose 9 is controlled because water can enter the hose 9 only at the open one end of the hose which is in the lower layer 10 and it moves spirally along the hose until the lower layer 10 is flooded whereupon flooding of the intermediate layer 11 commences and, when layer 11 is flooded, flooding of the portion of the hose in the upper layer 12 commences.

Once the raft is located on the bed of the river or lake, the electric motor 14 is operated to cause water to be drawn in through the inlet 16 of the pump 15 and then sent under pressure through the outlet 17 and the manifold 18 to the liquid inlets 19 of the aerators 20. The aerators draw in air through the upstanding pipes 23, which air is entrained in the liquid which is passed through the venturi nozzles, and the resulting mixture is discharged through the barrels 21 to effect aeration of the water.

When it is desired to recover the aeration equipment, the pump on the land is reversed so as to pump air along the duct and into the upper end of the hose 9, thereby to displace water progressively from the hose 9 so as to increase progressively the buoyancy of the equipment and the upward movement of the equipment through the body of water until the raft is on the surface.

Without in any way imparting any limitation to the dimensions, a raft which could be used conveniently and operated from the back of a lorry could have a maximum length, as taken from left to right in Figure 2, of 3.05 metres and a width of 2.54 metres. The height of the raft from the underside of the lower members 4 to the upper side of the upper members 3 could be 0.5 metre, and the hose could have a diameter of about 1.25 mm. The hose 9 could be a lightweight polyvinyl chloride hose with four turns in each spiral of the hose and with there being three layers.

The barrel 21 of each venturi aerator 20 can be at any convenient angle, a preferred angle of declination being 10°. The barrels 20 of the two aerators 21 can be of any desired angle relative to each other, a convenient angle being 40° as shown in Figure 2. With equipment of the type illustrated in Figures 1 and 2 and with the raft having aforementioned dimensions, the draft of the raft when the hose 9 is full of air would be approximately 0.3 metre.

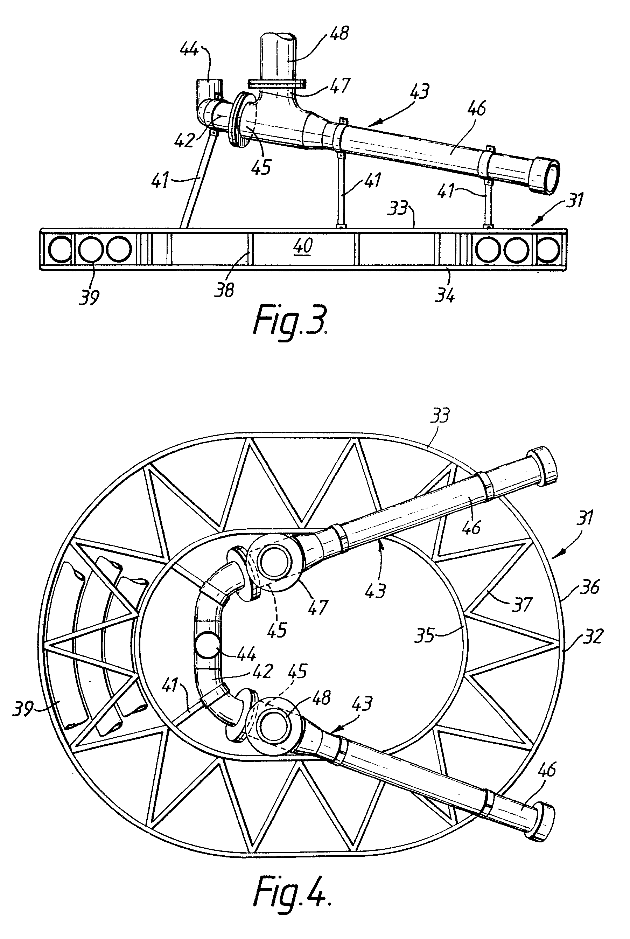

Reference will now be made to the second embodiment illustrated in Figures 3 and 4 of the accompanying drawings. Many of the components illustrated in the embodiment shown in Figures 3 and 4 are similar to, or correspond in function to, equivalent components shown in the embodiment of Figures 1 and 2.

To save unnecessary description, there is set out in the immediately following paragraph an indication of the components present in the embodiment of Figures 3 and 4 and, appearing against those components, an indication in parentheses of the equivalent components of the embodiment of Figures 1 and 2.

The embodiment of Figures 3 and 4 comprises a raft 31 (1) with a framework 32 (2) having upper members 33 (3), and lower members 34 (4), with inner peripheral inner elements 35 (5), outer peripheral elements 36 (6) and horizontal spacers 37 (7), as well as vertical spacers 38 (8); and a space 40 (13). There is also a hose 39 (9), elongate mountings 41 (with no direct equivalent in Figures 1 and 2), a manifold 42 (18) with an inlet 44, venturi aerators 43 (20) with liquid inlets 45 (19), barrels 46 (21), air inlets 47 (22) and upstanding pipes 48 (23).

Generally speaking, the equipment of Figures 3 and 4 is less elaborate than that of Figures 1 and 2 but works on the same principle. Thus the hose 39 is present merely as a single layer of the spirally wound hose 39, rather than in three layers as in the case of embodiment of Figures 1 and 2. Also, because the motor 14 and pump 15 of the embodiment of Figures 1 and 2 are so heavy, they have been deliberately omitted from the raft 31 of the embodiment of Figures 3 and 4. By omitting such heavy components the raft 31 and the components which it actually carries can be made sufficiently light to be handled by two men. The power to propel water through the manifold 42 and into the venturi aerators 43 comes from a land-based motor and pump unit, such as a conventional 15 centimetre (6 inch) diameter diesel-operated pump, commonly mounted on its own wheels, and drawn by a Land-Rover. The land-based pump draws water through a first conduit from the body of water and then propels it through a second flexible conduit extending from the pump to the raft, the water under pressure entering the inlet 44 and then travelling through the manifold 42 to the aerators 43.

As with the embodiment illustrated in Figures 1 and 2, the raft can remain buoyant or can be caused to submerge depending on the presence or absence of air in the hose 39, this being controlled through a flexible duct extending between a small, reversible pump on the bank, and one end of the hose 39, opposite end of the hose 39 being left continuously open.

When it is desired to operate the aeration equipment shown in Figures 3 and 4, the raft 31 can be slid off the back of a lorry or trailer and pushed down a ramp into the water by two men. Mooring lines can be attached to the raft at suitable attachment points (not shown).

Before the raft is moved away from the land-based lorry or trailer on the bank, the second flexible conduit is connected to the inlet 44 and to the land-based pump. The upright air pipes 48 are also attached to the inlet 47. Also uncoiled is the duct which communicates with one end of the hose 39 remote from the end which remains permanently open.

In view of the desirability to make the raft of Figures 3 and 4 manageable by two men, the raft can be made smaller than that of Figures 1 and 2, and thus the raft of Figures 3 and 4 could have, for example, an overall length of 2.5 metres and an overall width of 2 metres. The raft could have a height of 0.95 metre from the underside of the lower members 33 to the top of the inlet 44. The declination of the barrels 43 and the angle between the two barrels 43 can be much the same as for the barrels 21 in the embodiment shown in Figures 1 and 2. The gross weight of the aeration equipment illustrated in Figures 3 and 4 could be of the order of 150kg, whereas that of the equipment illustrated in Figures 1 and 2 could be of the order of 650kg.

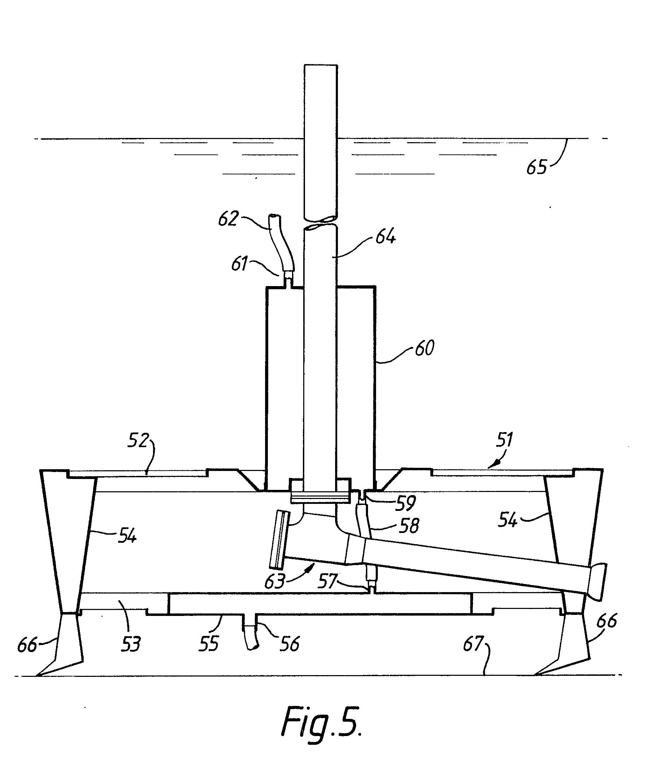

Turning now to the third embodiment illustrated in Figure 5, the equipment is similar to that shown in Figures 3 and 4 apart from the replacement of the single coil of hose by a plurality of fixed buoyancy tanks and a plurality of floodable buoyancy tanks. Thus, in Figure 5, there is shown a raft 51 having an upper framework 52 and a lower framework 53. Extending between the frameworks 52 and 53 is a plurality of fixed buoyancy tanks 54, of which only two are shown. Mounted on the lower framework 53 is a lower floodable buoyancy tank 55 which is open at its lower region 56, and which in an upper region 57 communicates with a duct 58 leading to a lower region 59 of an upper floodable buoyancy tank 60 carried on the upper framework 52. An upper region 61 of the tank 60 has a hose 62 leading to a pump (not shown) which can be located on a river bank and by means of which air can be pumped to or from the tank 60.

Centrally located on the raft 51 is an aerator 63 generally similar to those (43) shown in Figures 3 and 4. The aerator 63 has an air inlet 64 which passes axially through the tank 60 and leads upwardly beyond the surface 65 of the body of water in which the equipment is located.

The raft 51 is provided with anchor-like feet 66 to assist in holding the raft in place on a river-bed 67 during operation of the aerator 63.

## Claims

1. Aeration equipment comprising:
a submersible and refloatable raft provided with a floodable buoyancy means; and
at least one venturi aerator carried by the raft, the aerator including a nozzle through which a liquid is pumped in use, an outlet barrel, and an inlet port through which air can be blown into the barrel or drawn into the barrel by the action of the liquid passing through the nozzle.

2. Aeration equipment according to claim 1, wherein the floodable buoyancy means comprises one or more floodable tank.

3. Aeration equipment according to claim 2, which also includes one or more fixed buoyancy tank.

4. Aeration equipment according to claim 1, wherein the floodable buoyancy means comprises a hose.

5. Aeration equipment according to claim 4, wherein the hose is disposed as a spiral in one or more layer.

6. Aeration equipment according to any preceding claim, which includes a pump capable of pumping air into the floodable buoyancy means to achieve buoyancy, and optionally capable of withdrawing air from the floodable buoyancy means to permit the entry of water so as to allow the equipment to settle in a body of water.

7. Aeration equipment according to any preceding claim, which also includes a motor-driven pump associated with the nozzle of the or each venturi aerator.

8. Aeration equipment according to any preceding claim, wherein the raft is provided with lifting handles or lifting points, and with attachment points for mooring lines.

9. Aeration equipment according to any preceding claim, which includes an air supply pipe for supplying air to the inlet port of the or each venturi aerator.

10. Aeration equipment according to any preceding claim, which has one or two venturi aerators provided on the raft.

Fig.1.

Fig.2.

Fig.3.

Fig.4.

Fig.5.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 044 382 (WSW STAHL- UND WASSERBAU) * Page 1, lines 6-14; page 3, line 7 - page 4, line 20; page 12, claims 1,3,4,7,14 * | 1,2,7-10 | C 02 F 3/20 B 63 B 43/06 |
| X | AT-B- 377 743 (G. KRATOCHVIL) * Page 5, claim 1; page 3, lines 36-49; page 4, lines 7-32 * | 1,2,7,9,10 | |
| A | EP-A-0 142 720 (A. BLUM) * Page 11; claims 1-9 * | 1 | |
| A | WO-A-8 807 977 (G. PETRILLO) * Page 3, line 13 - page 4, line 22 * | 6 | |

TECHNICAL FIELDS SEARCHED (Int. Cl.4)

C 02 F
B 63 B

The present search report has been drawn up for all claims

| Place of search | Date of completion of the search | Examiner |
|---|---|---|
| THE HAGUE | 12-05-1989 | TEPLY J. |